# EUROPEAN PATENT SPECIFICATION

(11) **EP 2 754 123 B1**
(45) Date of publication and mention of the grant of the patent: **27.07.2016**
(21) Application number: 11755017.8
(22) Date of filing: 07.09.2011
(51) Int. Cl.: G06T 7/00

(54) **METHOD AND CAMERA ASSEMBLY FOR DETECTING RAINDROPS ON A WINDSCREEN OF A VEHICLE**
VERFAHREN UND KAMERAANORDNUNG ZUR ERFASSUNG VON REGENTROPFEN AUF EINER WINDSCHUTZSCHEIBE EINES KRAFTFAHRZEUGS
PROCÉDÉ ET ENSEMBLE CAMÉRA POUR DÉTECTER DES GOUTTES DE PLUIE SUR UN PARE-BRISE D'UN VÉHICULE

(43) Date of publication of application: 16.07.2014
(73) Proprietor: Valeo Schalter und Sensoren GmbH, 74321 Bietigheim-Bissingen (DE)
(72) Inventor: AHIAD, Samia, 93220 Gagny (FR); ROBERT, Caroline, F-75017 Paris (FR)
(86) International application number: PCT/EP2011/004506
(87) International publication number: WO 2013/034166

(56) References cited:
- EP-A1- 1 923 280
- WO-A1-01/77763
- US-A1- 2002 191 837
- Ching-Lin Yang: "A Study of Video-based Water Drop Detection and Removal Method for a Moving Vehicle", , 12 July 2011 (2011-07-12), XP55032694, Retrieved from the Internet: URL:http://ethesys.lib.cyut.edu.tw/ETD-db/ ETD-search/view_etd?URN=etd-0712111-170040 [retrieved on 2012-07-13]
- FAWZI NASHASHIBI ET AL: "Detection of unfocused raindrops on a windscreen using low level image processing", CONTROL AUTOMATION ROBOTICS&VISION (ICARCV), 2010 11TH INTERNATIONAL CONFERENCE ON, IEEE, 7 December 2010 (2010-12-07), pages 1410-1415, XP031899947, DOI: 10.1109/ICARCV.2010.5707398 ISBN: 978-1-4244-7814-9

## Description

The invention relates to a method for detecting raindrops on a windscreen of a vehicle, in which at least one image is captured by a camera. Moreover, the invention relates to a camera assembly for detecting raindrops on a windscreen of a vehicle.

For motor vehicles, several driving assistance systems are known, which use images captured by a single or by several cameras. The images obtained can be processed to allow a display on screens, for example at the dashboard, or they may be projected on the windscreen, in particular to alert the driver in case of danger or simply to improve his visibility. The images can also be utilized to detect raindrops or fog on the windscreen of the vehicle. Such raindrop or fog detection can participate in the automatic triggering of a functional units of the vehicle. For example the driver can be alerted, a braking assistance system can be activated, windscreen wipers can be turned on and/or headlights can be switched on, if rain is detected.

US 7 247 838 B2 describes a rain detection device comprising a camera and an image processor, wherein filters are used to divide an image processing area of an image captured by the camera in two parts. The upper two thirds of the screen are dedicated to an adaptive front lighting system and the lower third to raindrop detection. Thus, the same camera can be used for different functions.

The Master thesis by Ching-Lin Yang, "A study of Video-based Water Drop Detection and Removal Method for a Moving Vehicle", Chaoyang University of Technology discloses a the evaluation of a system with a camera installed behind the windshield of a vehicle for the detection of raindrops. This system separates the images acquired into road and building areas by using traffic lanes. Water drops are detected by the intersection of successive frames in regions of similar value.

EP 1923 280 A1 describes a bifocal sensor assembly for cameras to be placed on vehicles to achieve various tasks such as raindrop detection.

Quite a lot of computation time is needed in order to detect raindrops by image processing. This makes it difficult to design a camera with the required processing means embedded in a compact manner.

It is therefore the object of the present invention to create a method and a camera assembly for detecting raindrops on a windscreen of a vehicle, which require less computing time.

This object is met by a method with the features of claim 1 and by a camera assembly with the features of claim 7. Advantageous embodiments with convenient further developments of the invention are indicated in the dependent claims.

According to the invention, in a method for detecting raindrops on a windscreen of a vehicle, in which at least one image is captured by the camera, at least one reference object is identified in a first image captured by the camera. The at least one identified object is at least partially superimposed to at least one object extracted from a second image captured by the camera. Raindrop detection is then performed within the second image. As an already identified object is superimposed to an object extracted from the second image, there is no need for identification of this object in the second image. On the contrary objects in the second image, to which identified objects of the first image have been superimposed are rejected, and no identification effort has to be undertaken. This considerably reduces the computing time required to correctly detect raindrops on the windscreen. Also the eliminated or rejected objects do not cause any false drop detection. In order to superimpose the reference object to a corresponding object extracted from the second image similarities in size and/or shape may be considered.

Superimposing an identified object to an extracted object in the second image can be readily performed by superimposing at least one reference point from the first image to a reference point in the second image. There does not necessarily need to be complete congruence between the identified object in the first image and the extracted object in the second image. Tolerances may be accepted as long as there is at least a partial match between the identified object and the extracted object to which the identified object is superimposed.

A reference object is not a raindrop and different thereto and could be an especially a road marking or a tree beside the road or a curb stone or anything like that.

In an advantageous embodiment of the invention, raindrop detection is only performed for objects extracted from the second image, which are different from the at least one object to which the identified object is superimposed. This considerably reduces the complexity of raindrop detection in the second image.

In a further advantageous embodiment of the invention the at least one superimposed object is utilized to delimit a region within the second image to at least one side, wherein the raindrop detection is only performed for objects extracted from that region, which are different from the region's limits. With a region smaller than the second image raindrop detection performed among objects extracted from the second image is considerably less processing-time consuming than an identification of raindrops within the entire second image.

The at least one superimposed reference object can comprise a substantially linear element. This makes it particularly easy to delimit a region within the second image by the superimposed reference object. Also objects matching the reference objects can thus be readily found in the second image.

The at least one superimposed reference object may comprise in particular a lane marking and/or a road side and/or a road barrier and/or a road curb. Such objects are readily identified within the first image by image processing performed within the context of line assist driving assistance systems. Also it can be assumed that there are objects in the second image with the same function for road traffic. Consequently superimposing such reference objects to objects in the second image can easily be performed based on objects' similarity. Especially if such linear objects are already identified within another function performed by the camera, it is very useful to utilize the results within the raindrop detection process. Furthermore, eliminating objects which are outside an area corresponding to a driving lane delimited by lane markings, drastically reduces the complexity of the identification process. This is due to the fact that objects outside the region delimited by the lane markings are particularly numerous and variously shaped. On the contrary the driving lane itself is quite homogenous.

In another preferred embodiment of the invention the first image and the second image are image areas of one image captured by a bifocal camera. Thus the two image areas are images captured simultaneously, and a reference object identified in the first image area can very easily be superimposed to a corresponding object extracted from the second image area.

It has further turned out to be an advantage, if the first image is focused at a greater distance from the camera than the second image. This allows to perform reliable raindrop detection within the second image while other functions related to driving assistance systems may be performed by processing the first image.

It is particularly useful, if the first image is focused at infinity and the second image is focused on the windscreen. Then for each function, i.e. raindrop detection within the second image and line recognition in the first image, appropriate images or image areas are captured by the camera.

When objects extracted from the second image are classified in order to identify raindrops, a number of classifying descriptors can be utilized for reliable raindrop detection. These objects are different from the objects extracted from the second image, to which the reference object has been superimposed.

Finally, it has turned out to be advantageous, if a supervised learning machine is utilized to identify raindrops among objects extracted from the second image. Such a supervised learning machine, for example a support vector machine is particularly powerful in identifying rain drops. This can be performed by assigning a score or a confidence level to each extracted object, wherein the score or confidence level is indicative of a probability that the extracted object is a rain drop.

The camera assembly according to the invention, which is configured for detecting raindrops on a windscreen of a vehicle comprises a camera for capturing at least one image. It further comprises processing means configured to identify at least one object in a first image captured by the camera, superimpose the at least one identified reference object at least partially to at least one object extracted from the second image captured by the camera, and to perform raindrop detection within the second image. Such a camera assembly is able to perform raindrop detection within a particularly short computing time without an excessively powerful processing means. This allows the camera assembly to be particularly compact, which makes it possible to easily install it in the cabin of the vehicle.

The preferred embodiments presented with respect to the method for detecting raindrops and the advantages thereof correspondingly apply to the camera assembly according to the invention and vice versa.

Further advantages, features and details of the invention are apparent from the claims, the following description of preferred embodiments as well as from the drawings. Therein show:
- Fig. 1: a flow chart indicating steps of raindrop detection by image processing;
- Fig. 2: a flow chart visualizing a method in which a region within one image area of an image captured by a camera is delimited by lines identified within another image area of the image captured by the camera;
- Fig. 3: an image with identified driving lane markings superimposed to lane markings within a lower part of an image, wherein the driving lane markings are identified in the upper part of the same image;
- Fig. 4: another image, wherein a discontinuous line is detected in an upper part of the image, wherein a section of the discontinuous line is superimposed to an object extracted in the lower part of the same image;
- Fig. 5: a situation where truck wheels and a motorway barrier are eliminated from the raindrop identification process performed within a lower part of another image; and
- Fig. 6: very schematically a camera assembly configured to perform the detection of raindrops on a windscreen of a vehicle.

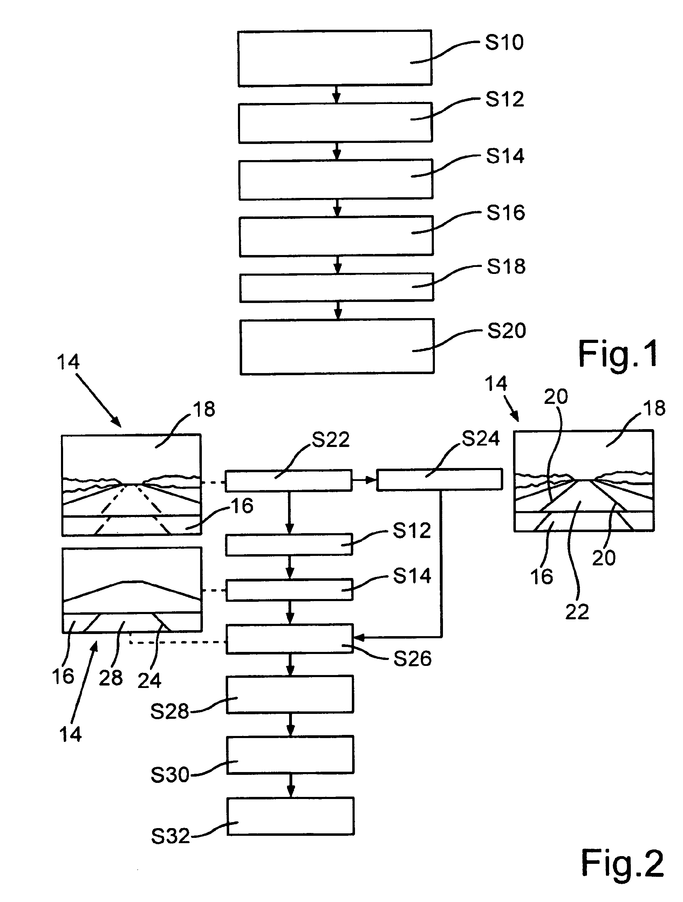

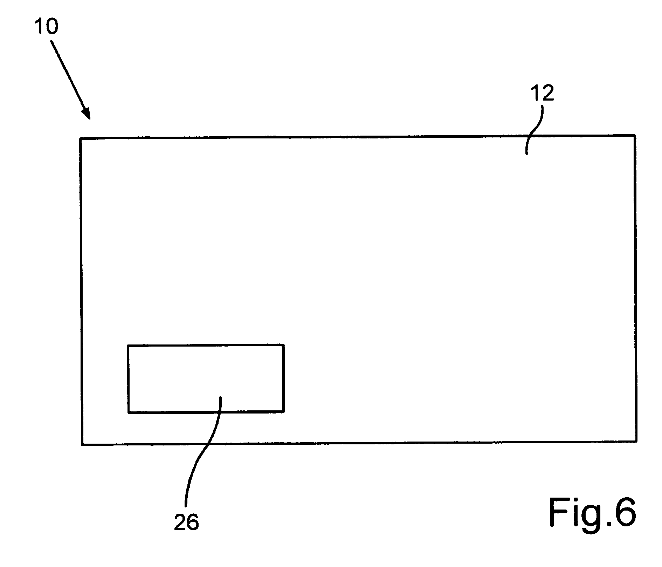

In Fig. 1 a flow chart visualizes the detection of raindrops on a windscreen of a vehicle, which is based on processing of an image captured by a camera 12. A camera assembly 10 (see Fig. 6) for detecting raindrops on the windscreen comprises the camera 12.

The camera 12 is a bifocal camera which is focused on the windscreen of the vehicle and focused at infinity. The camera 12 which may include a CMOS or a CCD image sensor is configured to view the windscreen of the vehicle and is installed inside a cabin of the vehicle. The windscreen can be wiped with the aid of wiper blades in case the camera assembly 10 detects raindrops on the windscreen. The camera 12 captures images of the windscreen, and through image processing it is determined whether objects on the windscreen are raindrops or not.

For the detection of raindrops on the windscreen the bifocal camera 12 captures an image 14, wherein a lower part 16 or lower image area is focused on the windscreen (see figure 2). After the focalization on the lower part 16 of the image 14 in step S10 image pre-processing takes place in step S12. For example, the region of interest is defined and noise filters are utilized.

In step S14 objects are extracted from the lower part 16 of the image 14. In a next step the extracted objects are classified in order to identify raindrops. In this step S16 a confidence level or score is computed for each extracted object, and the confidence level or score is assigned to the object. In a next step S18 raindrops are selected, if the score or confidence level of each extracted object is high enough. After determining whether extracted objects are classified as raindrops or non-drops the quantity of water on the windscreen is estimated in a step S20. According to the quantity of water on the windscreen an appropriate action is triggered. For instance the windscreen wipers wipe the windscreen in an appropriate manner to remove the raindrops, headlights are switched on, a braking assistance system is activated, or the driver is alerted that rainy conditions are present.

Fig. 2 shows how this raindrop detection is included in a process which benefits from parallel running software outputs which are based on image processing of an upper part 18 of the image 14 captured by the bifocal camera 12. In a step S22 the image 14 is captured, wherein the upper part 18 or upper image area is focused at infinity.

This upper part 18 of the image 14 is processed within a lane assist driving assistance system. The image processing of the upper part 18 of the image 14 may also be utilized within a speed limit driving assistance system, additionally or alternatively to driving lane departure functions. Consequently, in a step S24 objects such as lines 20 which delimit a driving lane 22 of a road are identified in the upper part 18 of the image 14. For the lower part 16 of the image 14 the image pre-processing step S12 and the objects extraction step S14 (see figure 1) are performed. Before the identification of objects as raindrops takes place, in a step S26 a region 24 is delimited in the lower part 16 of the image 14.

In order to delimit the region 24 the lines 20 identified in the upper part 18 of the image 14 are transferred into the lower part 16 of the image 14. As it can be assumed that the lines 20 bordering the driving lane 22 do also exist in the lower part 16 of the image 14, the lines 20 or at least part of the lines 20 are therefore superimposed to objects extracted within the lower part 16 of the image 14. These extracted objects in the lower part 16 of the image 14 do therefore not need to be classified or further analyzed, as it is known from the image processing of the upper part 18 that these objects are lane markings which continue in the lower part 18 of the image 14.

The rejection of objects to be processed further on drastically diminishes the number of objects that need to be labelled in further steps of image processing. Also the rejected objects do not lead to any false drop detection in the lower part 16 of the image 14. Furthermore, by limiting the region 24 in the lower part 16 of the image 14 fewer objects need to be classified within the lower part 16. For example, the lines 20 on the road itselves, the road sides, wheels of close driving vehicles and other objects outside the region 24 do not need to be classified.

Consequently, in step S28 labels are established for the objects inside the region 24 only. This classification or labelization of the objects within the region 24 is based on a set of descriptors which may describe object shape, intensity, texture and/or context. This classification is the main computing effort within the detection of raindrops. Only the objects inside the region 24 defined by the left and right bordering lines of the region 24 are analyzed, and the objects corresponding to the superimposed lines 20 are rejected. Thus pre-selecting the region 24 results in fewer objects to be processed.

As this processing is performed for only a limited number of objects, namely the objects within the region 24, the processing time can be reduced for a given processor 26 of the camera assembly 10 (see Fig. 6). By reducing the number of labels to be processed the computing effort to be performed by the processor 26 is reduced. Step S28 can therefore be performed in a relatively short time. Each label contains coordinates of a potential raindrop, texture descriptors and geometrical characteristics.

In a next step S30 selection is performed based on the utilized descriptors. This selection or recognition of real drops that need to be distinguished from objects that are non-drops is preferably performed by a supervised learning machine such as a support vector machine. Utilizing the characteristics of an object within the region 24 leads to the detection of raindrops 28 within the region 24 (see Fig. 2).

From the selection process in step S30 results a list of potential raindrops, wherein a confidence score is indicated for each one of the potential raindrops. Thus, in a step S32 objects having a score or confidence level the value of which is above a threshold value are retained as raindrops 28. With this result the quantity of water is estimated based on the number and the surface of these raindrops 28 within the analyzed area of the image.

By the utilization of the output of image processing in the upper part 18 of the image 14 for a driving assistance system such as lane departure the detection of raindrops 28 within the region 24 enables a performance enhancement of the camera assembly 10. The reduction of complexity is not only achieved by delimiting the region 24, but also by rejecting objects identified as the lines 20 and other details.

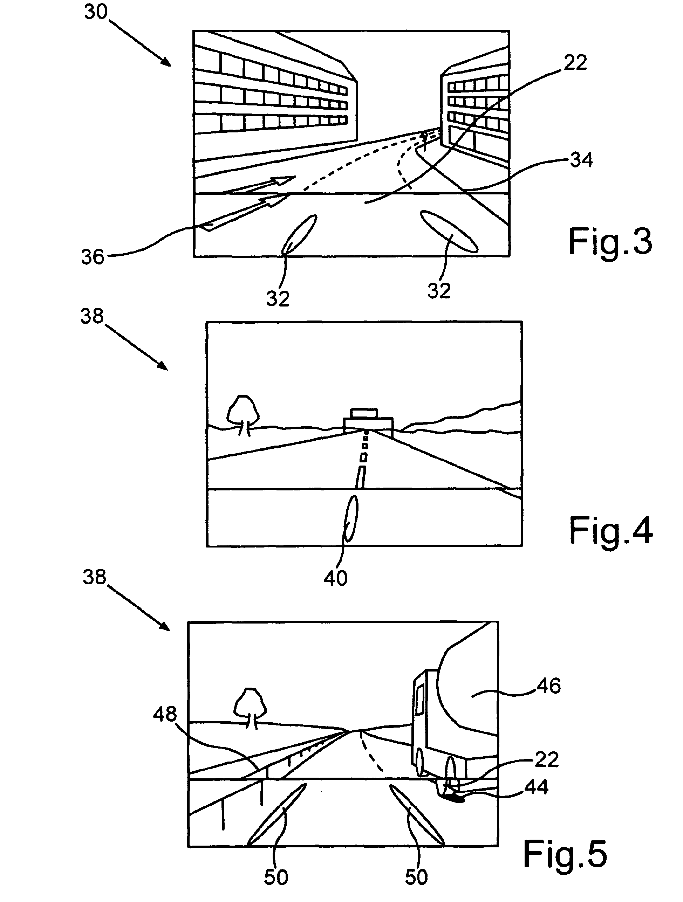

Fig. 3 shows an image 30 captured by the bifocal camera 12, wherein the identification of markings delimiting a driving lane 22 are superimposed to markings 32 which delimit the same driving lane 22 within the lower part of the image 30. As these markings 32 are rejected within the lower part of the image 30 before applying the raindrop recognition software, the detection of raindrops within the lower part of the image 30 can be performed particularly fast. Also, objects like the road curb of a sidewalk 34 or markings like an arrow 36 can be rejected prior to analyzing whether these objects are raindrops or not.

Fig. 4 shows another image 38 captured by the camera 12, wherein a discontinuous marking of the road, detected in the upper part of the image 34, is superimposed to a strip 40 of the discontinuous line which is located in the lower part of the image 38. In the lower part of the image 38 the strip 40 can be rejected without any processing needed for this rejection by the raindrop detection software.

In yet another image 42 captured by the camera 12 objects like wheels 44 of a truck 46, a motorway barrier 48 and the like are eliminated before analyzing them for raindrop detection within the lower part of the image 42. To achieve this the continuous line on one side of a driving lane 22 and the discontinuous line on the other side of the driving lane 22 are superimposed to corresponding sections 50 of the lines in the lower part of the image 42. By eliminating a number of objects in the lower part of the image 42 the complexity of the classification of objects is reduced and the computing can be performed more quickly.

Fig. 6 shows the camera assembly 10 with the camera 12 and the processor 26 in a schematical way.

## Claims

1. A method for detecting raindrops (28) on a windscreen of a vehicle, in which at least one image (14) is captured by a camera (12), at least one reference object (20) is identified in a first image (18) captured by the camera (12) and the at least one identified object (20) is at least partially superimposed to at least one object extracted from a second image (16) captured by the camera (12), wherein raindrop (28) detection is performed within the second image (16) **characterized in that** raindrop (28) detection is only performed for objects extracted from the second image (16), which are different from the at least one object to which the identified object (20) is superimposed, and the first image (18) and the second image (16) are image areas of one image (14) captured by a bifocal camera (12) wherein the first image (18) is focused at infinity and the second image (16) is focused on the windscreen.

2. The method according to claim 1,
**characterized in that** the at least one superimposed object (20) is utilized to delimit a region (24) within the second image (16) to at least one side, wherein the raindrop (28) detection is only performed for objects extracted from that region (24).

3. The method according to any one of claims 1 or 2,
**characterized in that** the at least one superimposed reference object comprises a substantially linear element, in particular a lane marking (20) and/or a road side and/or a road barrier and/or a road curb.

4. The method according to any one of claims 1 to 3, **characterized in that**
the first image (18) is focused at a greater distance from the camera (12) than the second image (16).

5. The method according to any one of claims 1 to 4.
**characterized in that**
objects extracted from the second image (16) are classified in order to identify raindrops (28).

6. The method according to any one of claims 1 to 5,
**characterized in that**
a supervised learning machine is utilized to identify raindrops (28) among objects extracted from the second image (16).

7. A camera assembly for detecting raindrops (28) on a windscreen of a vehicle,
comprising a camera (12) for capturing at least one image (14),
wherein
the camera assembly (10) comprises a bifocal camera (12) and processing means (26) configured to
- identify at least one reference object (20) in a first image (18) captured by the camera (12);
- superimpose the at least one identified object (20) at least partially to at least one object extracted from a second image (16) captured by the camera (12);
**characterized in that** the processing (26) means are further configured to
- perform raindrop (28) detection only for objects extracted from the second image (16), which are different from the at least one object to which the identified object (20) is superimposed, and the first image (18) and the second image (16) are image areas of one image (14) captured by the bifocal camera (12) wherein the first image (18) is focused at infinity and the second image (16) is focused on the windscreen.

## Patentansprüche

1. Verfahren zum Detektieren von Regentropfen (28) auf der Windschutzscheibe eines Fahrzeugs, bei dem mindestens ein Bild (14) von einer Kamera (12) aufgenommen wird,
mindestens ein Referenzobjekt (20) wird in einem ersten Bild (18), das von der Kamera (12) aufgenommen wird, identifiziert und das mindestens eine identifizierte Objekt (20) wird mindestens teilweise mindestens einem Objekt überlagert, das aus einem zweiten Bild (16), das von der Kamera (12) aufgenommen wird, extrahiert wird, wobei die Detektion von Regentropfen (28) innerhalb des zweiten Bildes (16) durchgeführt wird,
**dadurch gekennzeichnet, dass**
Detektion von Regentropfen (28) nur für Objekte durchgeführt wird, die aus dem zweiten Bild (16) extrahiert werden, die sich von dem mindestens einen Objekt unterscheiden, dem das identifizierte Objekt (20) überlagert wird, und
das erste Bild (18) und das zweite Bild (16) Bildgebiete eines Bildes (14) sind, das mit einer Bifokalkamera (12) aufgenommen wird, wobei das erste Bild (18) auf Unendlich scharf gestellt ist und das zweite Bild (16) auf die Windschutzscheibe scharf gestellt ist.

2. Verfahren nach Anspruch 1,
**dadurch gekennzeichnet, dass**
das mindestens eine überlagerte Objekt (20) verwendet wird, ein Gebiet (24) innerhalb des zweiten Bildes (16) auf mindestens eine Seite einzugrenzen, wobei die Detektion von Regentropfen (28) nur für Objekte durchgeführt wird, die aus dem Gebiet (24) extrahiert werden.

3. Verfahren nach einem der Ansprüche 1 oder 2,
**dadurch gekennzeichnet, dass**
das mindestens eine überlagerte Referenzobjekt ein im Wesentlichen lineares Element umfasst, insbesondere eine Fahrspurmarkierung (20) und/oder einen Straßenrand und/oder eine Leitplanke und/oder eine Straßenrandbefestigung.

4. Verfahren nach einem der Ansprüche 1 bis 3,
**dadurch gekennzeichnet, dass**
das erste Bild (18) auf einen größeren Abstand von der Kamera (12) scharf gestellt ist als das zweite Bild (16).

5. Verfahren nach einem der Ansprüche 1 bis 4,
**dadurch gekennzeichnet, dass**
aus dem zweiten Bild (16) extrahierte Objekte klassifiziert werden, um Regentropfen (28) zu identifizieren.

6. Verfahren nach einem der Ansprüche 1 bis 5,
**dadurch gekennzeichnet, dass**
eine kontrollierte Lernmaschine verwendet wird, um Regentropfen (28) unter aus dem zweiten Bild (16) extrahierten Objekten zu identifizieren.

7. Kamerabaugruppe zum Detektieren von Regentropfen (28) auf einer Windschutzscheibe eines Fahrzeugs, die eine Kamera (12) zum Aufnehmen mindestens eines Bildes (14) umfasst,
wobei die Kamerabaugruppe (10) eine Bifokalkamera (12) und Verarbeitungsmittel (26) umfasst, die ausgelegt sind zum
- Identifizieren mindestens eines Referenzobjekts (20) in einem ersten Bild (18), das von der Kamera (12) aufgenommen wird;
- Überlagern des mindestens einen identifizierten Objekts (20) mindestens teilweise mit mindestens einem Objekt, das aus einem zweiten Bild (16), das von der Kamera (12) aufgenommen wird, extrahiert wird;
**dadurch gekennzeichnet, dass** die Verarbeitungsmittel (26) ferner dafür ausgelegt sind
- Detektieren von Regentropfen (28) nur für Objekte durchzuführen, die aus dem zweiten Bild (16) extrahiert werden, die sich von dem mindestens einen Objekt unterscheiden, dem das identifizierte Objekt (20) überlagert wird, und das erste Bild (18) und das zweite Bild (16) Bildgebiete eines Bildes (14) sind, das mit einer Bifokalkamera (12) aufgenommen wird, wobei das erste Bild (18) auf Unendlich scharf gestellt ist und das zweite Bild (16) auf die Windschutzscheibe scharf gestellt ist.

## Revendications

1. Procédé de détection de gouttes de pluie (28) sur un pare-brise d'un véhicule, dans lequel au moins une image (14) est capturée par une caméra (12) ;
au moins un objet de référence (20) est identifié dans une première image (18) capturée par la caméra (12) et ledit au moins un objet identifié (20) est au moins partiellement superposé sur au moins un objet extrait d'une seconde image (16) capturée par la caméra (12), une détection de goutte de pluie (28) étant effectuée dans la seconde image (16) ;
**caractérisé en ce que** :
- la détection de goutte de pluie (28) est effectuée uniquement pour des objets extraits de la seconde image (16) qui sont différents dudit au moins un objet sur lequel l'objet identifié (20) est superposé ; et
- la première image (18) et la seconde image (16) sont des zones d'image d'une image (14) capturée par une caméra bifocale (12), dans lequel la première image (18) est focalisée à l'infini et la seconde image (16) est focalisée sur le pare-brise.

2. Procédé selon la revendication 1, **caractérisé en ce que** ledit au moins un objet superposé (20) est utilisé pour délimiter une région (24) dans la seconde image (16) vers au moins un côté, la détection de goutte de pluie (28) se faisant uniquement pour des objets extraits de cette région (24).

3. Procédé selon l'une quelconque des revendications 1 ou 2, **caractérisé en ce que** ledit au moins un objet de référence superposé comprend un élément essentiellement linéaire, notamment un marquage de voie (20) et/ou un bas-côté et/ou une barrière de route et/ou un virage de route.

4. Procédé selon l'une quelconque des revendications 1 à 3, **caractérisé en ce que** la première image (18) est focalisée à une distance plus grande de la caméra (12) que la seconde image (16).

5. Procédé selon l'une quelconque des revendications 1 à 4, **caractérisé en ce que** les objets extraits de la seconde image (16) sont classés dans l'ordre afin d'identifier des gouttes de pluie (28).

6. Procédé selon l'une quelconque des revendications 1 à 5, **caractérisé en ce qu'**une machine d'apprentissage supervisée est utilisée pour identifier des gouttes de pluie (28) parmi des objets extraits de la seconde image (16).

7. Système de caméra pour détecter des gouttes de pluie (28) sur un pare-brise d'un véhicule, comprenant une caméra (12) pour capturer au moins une image (14) ; dans lequel le système de caméra (10) comprend une caméra bifocale (12) et un moyen de traitement (26) conçu pour:
- identifier au moins un objet de référence (20) dans une première image (18) capturée par la caméra (12) ;
- superposer au moins partiellement ledit au moins un objet identifié (20) sur au moins un objet extrait d'une seconde image (16) capturée par la caméra (12) ;
**caractérisé en ce que** le moyen de traitement (26) est en outre conçu pour effectuer une détection de goutte de pluie (28) uniquement pour des objets extraits de la seconde image (16) qui sont différents dudit au moins un objet sur lequel l'objet identifié (20) est superposé ; et
la première image (18) et la seconde image (16) sont des zones d'image d'une image (14) capturée par la caméra bifocale (12), dans lequel la première image (18) est focalisée à l'infini et la seconde image (16) est focalisée sur le pare-brise.
